# EUROPEAN PATENT APPLICATION

(11) **EP 2 009 922 A2**
(43) Date of publication of application: **31.12.2008**
(21) Application number: 08153649.2
(22) Date of filing: 28.03.2008
(51) Int. Cl.: H04N 7/26, H04N 7/50, H04N 1/64

(54) **Method and apparatus for video enhancement by reorganizing group of pictures**

(30) Priority: 28.06.2007 KR 20070064611
(71) Applicant: SAMSUNG ELECTRONICS CO., LTD., Suwon-si, Gyeonggi-do 442-742 (KR)
(72) Inventor: Choi, Jin-hyeon, Seoul (KR); Lee, Min-jae, Jung-gu, Seoul (KR); Lee, Joong-hwan, Suwon-si, Gyeonngi-do (KR); Shim, Hyo-sun, 208-1105 Imaechon Hanshin Apt., Seongnam-si, Gyeonngi-do (KR)
(74) Representative: Brandon, Paul Laurence

(57) **Abstract**

A method and apparatus for video enhancement by selectively reorganizing a group of pictures (GOP). The method includes counting the number of error blocks of a current frame to be decoded from among a plurality of frames included in the GOP; determining whether to display the current frame and one or more subsequent frames in accordance with the number of error blocks; and reorganizing a GOP with frames determined to be displayed and displaying the reorganized GOP.

## Description

### BACKGROUND OF THE INVENTION

### 1. Field of the Invention

Aspects of the present invention relate to methods and apparatus for video enhancement.

### 2. Related Art

In accordance with data compression standards, such as H.26x standards of the International Telecommunication Union (ITU) or Moving Picture Experts Group (MPEG) standards of the International Organization for Standardization (ISO), video compression is used broadly. Large-scale video transmission is required for a large number of video applications, such as video players, video on demand (VOD) players, and video phones. Video compression may be used for faster and more efficient video transmission. Accordingly, the above-mentioned data compression standards are widely used for video applications.

In the video compression standards discussed above, correlations between temporally separated pictures are reduced and only different pictures are transmitted and used, in order to increase compression efficiency. The pictures are divided into intra (I), predictive (P), and bidirectional (B) frames. An I frame is encoded and decoded using its own information, a P frame is encoded and decoded by predicting a current picture using information of previous pictures, and a B frame is encoded and decoded using information of previous and subsequent pictures.

The video compression standards increase the compression efficiency by using a motion estimation/compensation algorithm. In order to encode a frame using previous and subsequent pictures, input video data needs to be rearranged temporally in units of frames. By rearranging the video data, the temporal order of the frames of the video data is changed. The video data temporally rearranged by an encoding terminal is decoded and rearranged to the same temporal order of the original video data so that the video data is displayed on a screen of a reception terminal correctly.

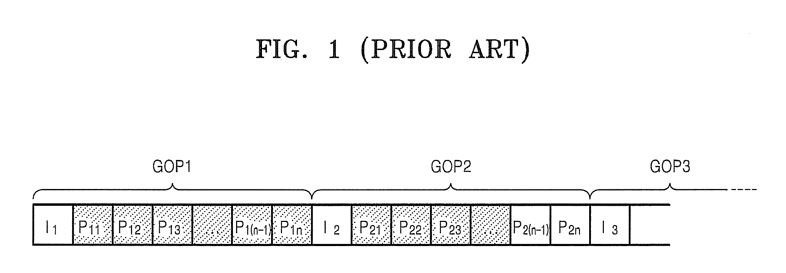

FIG. 1 is a diagram of normal GOPs 1, 2, and 3. GOPs 1, 2, and 3 of FIG. 1 are composed of I and P frames. Each of the GOPs 1, 2, and 3 starts with an I frame and one or more P frames subsequent to the I frame. As shown in FIG. 1, GOP 1 includes an I frame *I*₁ and n P frames *P*₁₁, *P*₁₂. .... *P*_{1*n*}. GOPs 2 and 3 subsequent to GOP 1 also start with I frames *I*₂, *I*₃, respectively. Thus, the fact that a new I frame is input means that a new GOP is input.

In a current packet network, lossless data transmission is not ensured on traffic paths and thus video deterioration inevitably occurs due to packet losses. In particular, compressed video data, such as MPEG data, uses motion information of reference pictures. If packet losses occur in a previous picture, a subsequent picture referring to lost packets may not be properly restored. This kind of phenomenon is known as error propagation.

Furthermore, due to a block of packets having an error by losing packet information, spatial error propagation occurs so that neighboring blocks also have errors. For example, a P frame *P_{xy}* is encoded and decoded using a previous I frame *Iₓ* and at least one of previous P frames *P*_{*x*1} : *P*_{*x*2} ,..., *P*_{*x*(*y*-1)}. Accordingly, if an error occurs in the I frame *Iₓ* and the P frames *P*_{*x*1}, *P*_{*x*2}, ..., *P*_{*x*(*y*-1)} during data transmission, the error also occurs in the P frame *P_{xy}* decoded using the I frame *Iₓ* and the P frames *P*_{*x*1}, *P*_{*x*2}, ..., *P*_{*x*(*y*-1)}, due to the error propagation.

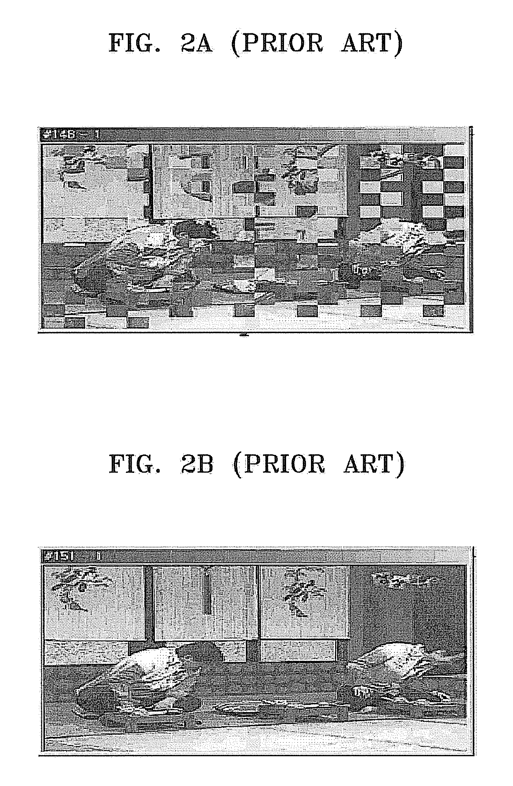

FIGS. 2A and 2B show examples of pictures when packet losses occur in a wireless environment. As shown in FIG. 2A, a GOP is damaged by an error during data transmission. If a frame of the GOP has block losses during the data transmission, subsequent frames on which error concealment is performed using the frame having an error have serious video deterioration due to error propagation. In particular, the error concealment is performed on the frame in blocks so that a block-shaped error occurs repeatedly.

As shown in FIG. 2B, an I frame of a subsequent GOP of the damaged GOP of FIG. 2A is transmitted without an error and thus a normal picture is viewed. As such, the GOP damaged due to block losses is viewed as shown in FIG. 2A and then, when the I frame of the subsequent GOP is input, the normal picture is viewed as shown in FIG. 2B. Accordingly, deteriorated and normal pictures are periodically viewed in turns.

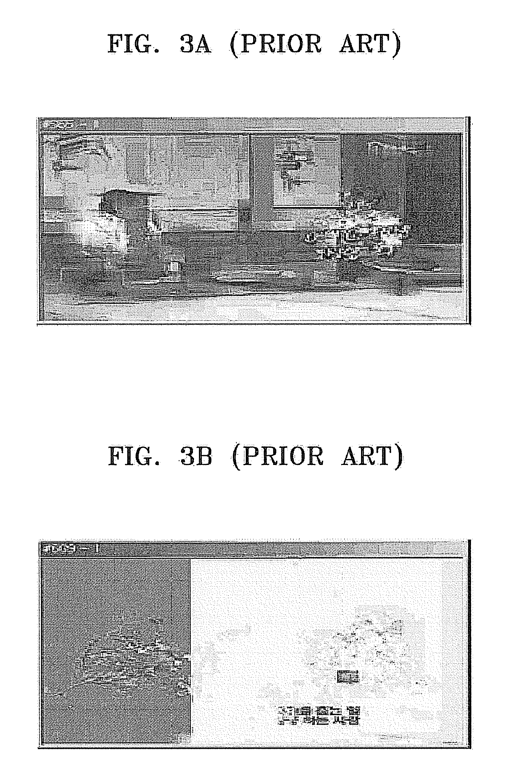

FIGS. 3A and 3B show examples of pictures damaged due to error propagation. If a large number of blocks of previous I and P frames of the same GOP are lost due to errors, a subsequent P frame referring to the previous I and P frames is seriously deteriorated due to error propagation. The errors may be propagated in block shapes, as shown in FIG. 2A. Furthermore, so many errors may be propagated that an original picture cannot be figured out due to erroneous information of the previous I and P frames, as shown in FIGS. 3A and 3B.

In order to prevent image distortion due to temporal or spatial error propagation caused by packet losses, a variety of error control methods, such as forward error correction, automatic repeat request (ARQ), and error concealment are used. Forward error correction allows restoration of video data lost in a network, in a reception terminal or determination of whether data is lost or not by inserting a parity bit or a Reed-Solomon (RS) code to a data bit frame. The ARQ necessarily requires an inverse-directional channel because a delay time for video play increases. The error concealment restores information of lost blocks using a reference frame or a current frame.

In a case of frames in a quarter video graphics array (QVGA) format, a frame is composed of approximately three hundred macroblocks. Each macroblock is split into a plurality of slices in accordance with an option, and the slices are transmitted wirelessly. However, a large number of packet losses occur in accordance with circumstances of a wireless environment and the reception terminal performs the error concealment in order to compensate for the packet losses. Error concealment performed using erroneous information causes video deterioration. Furthermore, if the error concealment is performed when a previous picture is abruptly changed into a current picture, block-based restoration may not be properly performed so that errors are propagated in blocks.

### SUMMARY OF THE INVENTION

Preferred embodiments of the present invention aim to provide a method and apparatus for enhancing video data to be ultimately displayed by selectively reorganizing a group of pictures (GOP) in accordance with the number of error blocks.

Preferred embodiments of the present invention also aim to provide a method of performing error concealment on a frame having error blocks that occur due to packet losses generated during data transmission and a method of selecting a frame to be included in a GOP to be ultimately displayed, in accordance with the number of error blocks.

Additional aspects and/or advantages of the invention will be set forth in part in the description which follows and, in part, will be obvious from the description, or may be learned by practice of the invention

According to an aspect of the present invention, a method of video enhancement by reorganizing a group of pictures (GOP) is provided. The method includes counting a number of error blocks of a current frame to be decoded from among a plurality of frames included in the GOP; determining whether to display the current frame and one or more subsequent frames based on the number of error blocks; and displaying the current frame and the subsequent frames based on the determination.

Suitably, the counting of the number of error blocks includes detecting the error blocks of the current frame; adaptively performing error concealment according to a type of the current frame; and counting a frequency of the performed error concealment.

Suitably, whether to display the current frame and the subsequent frames is determined after the error concealment is performed on every block of the current frame.

Suitably, the determining of whether to display the current frame and the subsequent frames includes determining to display the current frame if the number of error blocks is less than a predetermined threshold value; and determining not to display the current frame and one or more subsequent frames if the number of error blocks is equal to or greater than the predetermined threshold value.

Suitably, the method further includes determining not to count the numbers of error blocks of the subsequent frames if the number of error blocks is equal to or greater than the predetermined threshold value.

Suitably, if the number of error blocks is equal to or greater than the predetermined threshold value, the determining of whether to display the current frame and the subsequent frames includes determining to display a previous frame that was displayed prior to the current frame instead of the current frame and the subsequent frames determined not to be displayed.

Suitably, the method further includes reorganizing a GOP with frames determined to be displayed; and displaying the reorganized GOP.

Suitably, the number of error blocks is counted in units frames.

Suitably, whether to display the current frame and the subsequent frames is determined in units of GOPs.

Suitably, the adaptive performing of the error concealment includes adaptively selecting temporal error concealment or spatial error concealment.

Suitably, spatial error concealment is performed if the current frame is an intra (I) frame.

Suitably, temporal error concealment is performed if the current frame is a predictive (P) frame.

Suitably, the threshold value is set separately according to the type of error concealment.

According to another aspect of the present invention, there is provided an apparatus to enhance video by reorganizing a group of pictures (GOP) is provided. The apparatus includes an error block counter to count a number of error blocks of a current frame to be decoded from among a plurality of frames included in the GOP; and a display determination unit to determine whether to display the current frame and one or more subsequent frames based on the number of error blocks.

Suitably, the error block counter includes an error block detection unit to detect the error blocks of the current frame; an error concealment performance unit to adaptively perform error concealment according to the type of frame; and a cumulative counter to count a frequency of the error concealment performed by the error concealment performance unit.

Suitably, the apparatus further includes a display unit to reorganize a GOP with frames determined to be displayed by the display determination unit and displaying the reorganized GOP.

According to another aspect of the present invention, a computer readable recording medium is provided having recorded thereon a computer program to execute the method of video enhancement.

In addition to the example embodiments and aspects as described above, further aspects and embodiments will be apparent by reference to the drawings and by study of the following descriptions.

### BRIEF DESCRIPTION OF THE DRAWINGS

A better understanding of the present invention will become apparent from the following detailed description of example embodiments and the claims when read in connection with the accompanying drawings, all forming a part of the disclosure of this invention. While the following written and illustrated disclosure focuses on disclosing example embodiments of the invention, it should be clearly understood that the same is by way of illustration and example only and that the invention is not limited thereto. The spirit and scope of the present invention are limited only by the terms of the appended claims. The following represents brief descriptions of the drawings, wherein:
FIG. 1 is a diagram of normal groups of pictures (GOPs) 1, 2, and 3. GOPs 1, 2, and 3 of FIG. 1 are composed of I and P frames;
FIGS. 2A and 2B show examples of pictures when packet losses occur in a wireless environment;
FIGS. 3A and 3B show examples of pictures damaged due to error propagation;
FIG. 4 is a block diagram of an apparatus for video enhancement, according to an example embodiment of the present invention;
FIG. 5 is a diagram for describing a method of selecting a frame to be displayed in accordance with the number of error blocks, according to an example embodiment of the present invention;
FIG. 6 is a flowchart of a method of adaptively concealing errors and selecting a frame in accordance with the type of the frame, according to an example embodiment of the present invention;
FIG. 7 is a diagram of GOPs reorganized with frames to be displayed, according to an example embodiment of the present invention;
FIGS. 8A and 8B show pictures displayed by reorganized GOPs, according to an example embodiment of the present invention; and
FIG. 9 is a flowchart of a method for video enhancement, according to an example embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

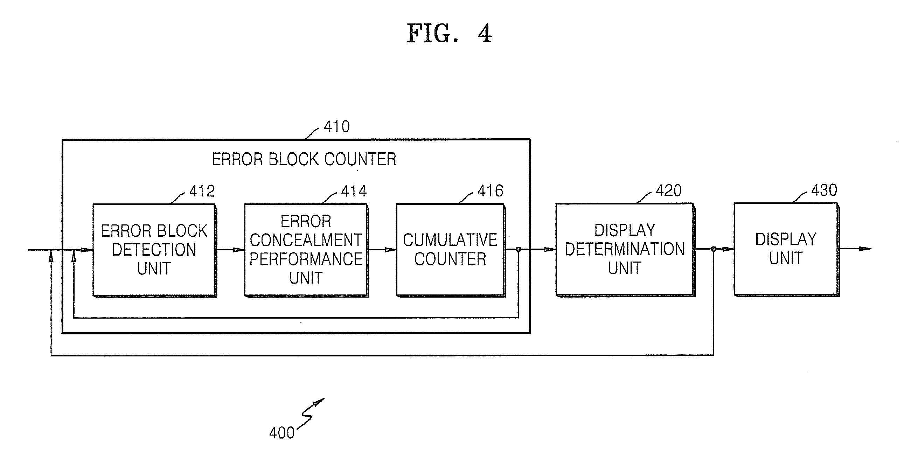

FIG. 4 is a block diagram of an apparatus 400 for video enhancement, according to an example embodiment of the present invention. As shown in FIG. 4, the apparatus 400 includes an error block counter 410 including an error block detection unit 412, an error concealment performance unit 414, a cumulative counter 416, a display determination unit 420, and a display unit 430. According to other aspects of the invention, the apparatus 400 may include additional and/or different units. Similarly, the functionality of two or more of the above units may be integrated into a single component.

The apparatus 400 receives frames having packets lost in a wireless video communication environment, in groups of pictures (GOPs), performs error concealment in frames, and outputs ultimately reorganized GOPs. Although described in terms of a wireless video communication environment, aspects of the present invention may also be employed in a wired communication environment or other situation where error correction of video data may need to be performed.

In order to prevent video deterioration caused by packet losses occurring in the wireless video communication environment, the error concealment adaptively selected according to the type of frame is performed in blocks. A GOP is reorganized by determining frames to be ultimately displayed in accordance with the numbers of blocks on which the error concealment is performed.

The error block counter 410 counts the number of error blocks in a currently decoded frame from among a plurality of frames of a GOP and outputs the number to the display determination unit 420.

A wireless video communication system continuously receives data packets, each composed of a network abstraction layer (NAL), and forms the data packets having a same time stamp into a frame. A decoding terminal processes data in NALs. When all input NALs having the same time stamp are processed completely, the decoding terminal forms the NALs into the frame. However, an input frame may have NAL losses due to the wireless video communication environment. The NAL losses are directly connected with block losses. Error concealment is performed by detecting lost blocks by the error block detection unit 412 and the error concealment performance unit 414.

The error block detection unit 412 receives a current frame, determines whether the current frame has error blocks, and, if the current has error blocks, outputs the current frame to the error concealment performance unit 414.

The error concealment performance unit 414 adaptively performs the error concealment on the current frame received from the error block detection unit 412 in accordance with the type of the error blocks and outputs the current block on which the error concealment is performed to the cumulative counter 416. The cumulative counter 416 counts a frequency of the error concealment performed by the error concealment performance unit 414 based on the error blocks received from the error concealment performance unit 414.

The error block detection unit 412, the error concealment performance unit 414, and the cumulative counter 416 may operate in blocks. Accordingly, if the error block detection unit 412 determines whether a current block has an error and detects the current block as an error block, the error concealment performance unit 414 and the cumulative counter 416 operate on the current block. If the current frame also includes a block subsequent to the current block, the above operations are repeated on the subsequent block.

Error concealment may be performed on each error block so that the frequency of the error concealment performed by the error concealment performance unit 414 is the same as the number of error blocks. Thus, the cumulative counter 416 increases the number of error blocks by one whenever the error concealment performance unit 414 performs the error concealment. The cumulative counter 416 counts the frequency of the error concealment so as to count the number of error blocks in frames. Accordingly, the cumulative counter 416 is reset to zero for a new frame.

The display determination unit 420 determines whether to display the current frame and one or more subsequent frames of the current frame in accordance with the number of blocks received from the error block counter 410, and outputs the determined display information to the display unit 430. The display determination unit 420 outputs the result of determining whether the apparatus 400 is to be operated on a subsequent frame to the error block counter 410.

The display determination unit 420 may set a predetermined threshold value with respect to the number of error blocks. Here, if the number of error blocks on which the error concealment is performed in the current frame is equal to or greater than the threshold value, the display determination unit 420 does not select the current frame or the subsequent frame as a frame to be displayed and does not select a frame on which the error concealment is to be performed. On the other hand, if the number of error blocks is less than the threshold value, the display determination unit 420 selects the current frame as the frame to be displayed and the subsequent frame is applied to the apparatus 400 in order to determine whether to display the subsequent frame.

The display unit 430 displays the reorganized GOP using the results of determination received from the display determination unit 420. The display unit 430 displays the reorganized GOP including frames determined to be displayed by the display determination unit 420 and does not display a damaged frame and subsequent frames of the damaged frame that are determined not to be displayed by the display determination unit 420.

The display determination unit 420 may count the number of error blocks frame by frame and determine whether to display a current frame in accordance with the number of error blocks by setting the threshold value with respect to the number of error blocks. If the number of error blocks of the current frame is equal to or greater than the threshold value, the current frame may be determined to have an excessively large number of errors and may be seriously damaged by the errors. Accordingly, the current frame is excluded from a reorganized GOP to be ultimately displayed.

Preferred embodiments of the present invention prevent video deterioration caused by error propagation. If the current frame has a large number of errors, the subsequent frames referring to the current frame may also be seriously damaged by the errors. Accordingly, if the number of error blocks of the current frame is equal to or greater than the threshold value, one or more subsequent frames in a current GOP, as well as the current frame, are not displayed. Furthermore, errors of frames not to be displayed do not need to be corrected and thus the error concealment need not be performed on the subsequent frames.

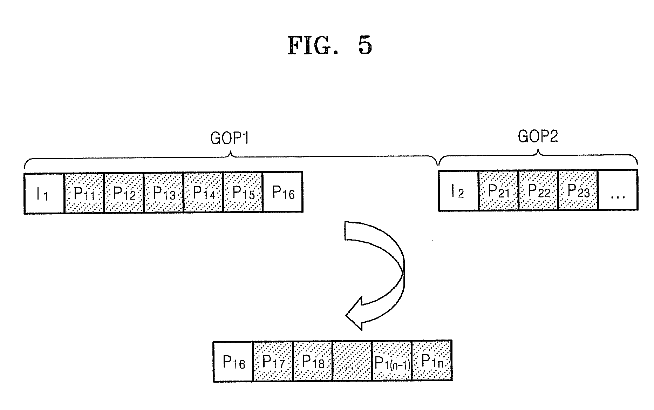

FIG. 5 is a diagram describing a process of selecting a frame to be displayed in accordance with the number of error blocks, according to an embodiment of the present invention. In the example shown in FIG. 5, each of GOPs 1 and 2 includes one I frame and n P frames. If a sixth P frame P₁₆ of the GOP 1 has a number of error blocks which is equal to or greater than a predetermined threshold value, subsequent pixels P₁₇ through P₁ₙ, as well as the frame P₁₆, are determined not to be displayed and thus are excluded from the GOP 1 that is to be displayed.

According to an example embodiment of the present invention, a frame determined as having a large number of errors and one or more subsequent frames may be excluded from a reorganized GOP that is to be displayed. As shown in FIG. 5, the frame P₁₆ determined as having a large number of errors and all the subsequent frames P₁₇ through P₁ₙ are excluded from the GOP 1. In addition, error detection and error concealment are not performed on the excluded frames P₁₆ through P₁ₙ. The number of operations performed by the apparatus 400 is thus reduced.

For example, if a GOP is composed of fifteen frames and a first I frame has a large number of lost blocks, errors of the I frame propagate through fourteen subsequent frames of the I frame, thereby causing rapid video deterioration. Thus, the I frame and the fourteen subsequent frames may all be excluded from the reorganized GOP that is to be displayed. Although all frames of the GOP1 are excluded, when the GOP 2 is input, the apparatus 400 counts the number of error blocks in frames and determines frames to be displayed on a screen without reference to the GOP1.

Referring back to FIG. 4, operations of the error block counter 410 and the display determination unit 420 of the apparatus 400 will now be described. The error concealment is differently performed on an I frame and a P frame. An I frame has all necessary information in the I frame and thus spatial error concealment is performed. By performing spatial error concealment, a damaged block is compensated for using neighboring blocks in the same I frame. On the other hand, temporal error concealment is performed on a P frame and a damaged block is compensated for by adapting information of similar blocks of neighboring frames using a reference index of the damaged block.

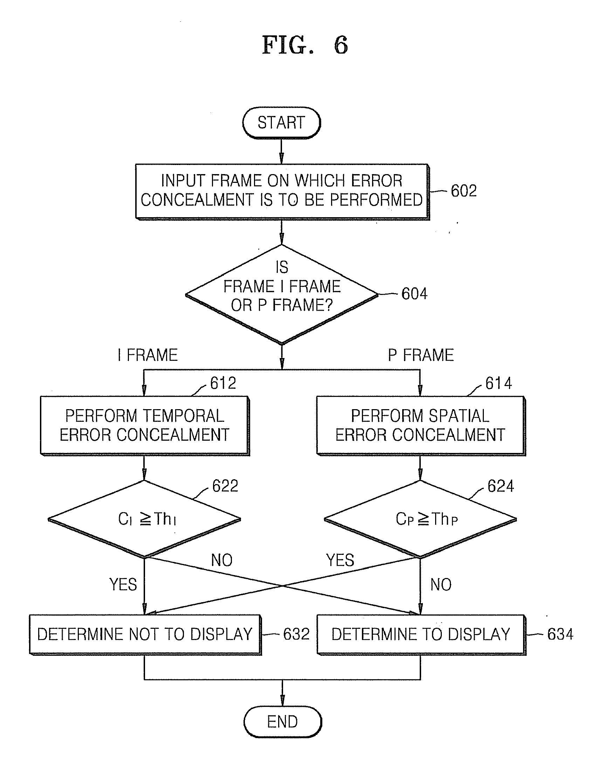

FIG. 6 is a flowchart of a process of adaptively concealing errors and selecting a frame in accordance with the type of frame, according to an embodiment of the present invention. At block 602, a frame having a number of error blocks equal to or greater than a predetermined threshold value is input from a current GOP.

Whether the frame input in operation 602 is an I frame or a P frame is determined at block 604. If the input frame is an I frame, spatial error concealment is performed on the error blocks of the input frame at block 612. If the input frame is a P frame, temporal error concealment is performed on the error blocks of the input frame at block 614.

At block 622, a frequency C_{I} of the spatial error concealment performed at block 612 is compared to a threshold value Th_{I}. If the frequency C_{I} is equal to or greater than the threshold value Th_{I}, the process proceeds to block 632, and if not, the process proceeds to block 634.

At block 624, a frequency C_{P} of the temporal error concealment performed at block 614 is compared to a threshold value Th_{P}. If the frequency C_{P} is equal to or greater than the threshold value Th_{P}, the process proceeds to block 632, and if not, the process proceeds to block 634.

The threshold value Th_{I} of the spatial error concealment and the threshold value Th_{P} of the temporal error concealment may be set separately. Thus, reference numbers of the error blocks for the I and P frames may be different from each other. Therefore, a condition for reorganizing the current GOP may be adaptively determined according to the type of frame.

At block 632, if the number of error blocks C_{I} or the number of error blocks C_{P} of the input frame is equal to or greater than the threshold value Th_{I} or the threshold value Th_{P}, the input frame is determined as having a large number of errors and is excluded from a reorganized GOP. Furthermore, one or more subsequent frames of the input frame in the same GOP are also excluded from the reorganized GOP.

At block 634, if the number of error blocks C_{I} or the number of error blocks C_{P} of the input frame is less than the threshold value Th_{I} or the threshold value Th_{P}, the input frame is determined as a normal frame and is selected to be included in the reorganized GOP.

As the threshold value Th_{I} or the threshold value Th_{P} increases, the number of error blocks detected decreases. Similarly, as the threshold value Th_{I} or the threshold value Th_{P} decreases, the number of error blocks detected increases. Accordingly, the possibility that the input frame is included in the reorganized GOP increases as the threshold value Th_{I} or the threshold value Th_{P} increases and thus the possibility that the input frame will be displayed also increases. On the other hand, the possibility that the input frame will be included in the reorganized GOP decreases as the threshold value Th_{I} or the threshold value Th_{P} decreases, and thus the possibility that the input frame will be displayed also decreases.

The temporal error concealment and another type of error concealment, as well as the spatial error concealment, may be adaptively performed on the I frame in accordance with the characteristic of the I frame and the communication environment. Likewise, the spatial error concealment and another type of error concealment, as well as the temporal error concealment, may be adaptively performed on the P frame in accordance with the characteristic of the P frame and the communication environment.

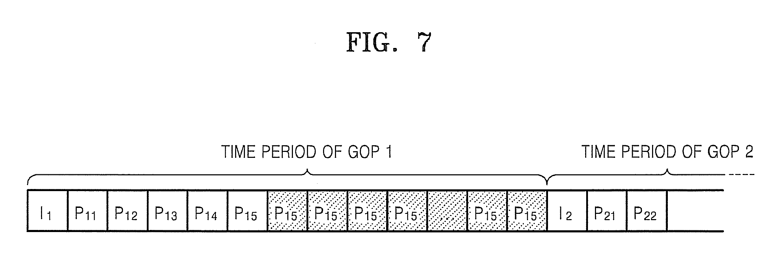

FIG. 7 is a diagram of GOPs reorganized with frames to be displayed, according to an example embodiment of the present invention. As shown in FIG. 7, if a frame having a large number of error blocks and one or more subsequent frames are excluded from the GOP 1, frames to be displayed for a period of time of the GOP 1 have to be determined. For example, if the frames P₁₆ through P₁ₙ are excluded as shown in FIG. 5, a previous frame P₁₅ that was displayed last is displayed continuously for a period of time corresponding to the excluded frames P₁₆ through P_{1n.} In other words, the frame P₁₅ is displayed instead of the excluded frames P₁₆ through P_{1n.} The frame P₁₅ is displayed until a new I frame I₂ of the GOP 2 is input and displayed.

For example, in an H.264 system, thirty or fifteen frames are displayed each second and thus a display time of a frame is very short. Accordingly, in view of video quality, it is more advantageous to continuously display a previous frame that was displayed last for a corresponding period of time than to display frames that are seriously damaged due to error propagation.

Therefore, if threshold values Th_{I} and Th_{P} are large, frames having larger numbers of error blocks are displayed, as comparised to a case when the threshold values Th_{I} and Th_{P} are small, and thus the video quality may deteriorate. However, the connection of frames may be good. On the other hand, if the threshold values Th_{I} and Th_{P} are small, the connection of frames may also be good. However, the frames having larger numbers of error blocks are not displayed as compared to the case when the threshold values Th_{I} and Th_{P} are large, and thus the video quality may be efficiently enhanced. Accordingly, unless the period of time of the previous frame to be displayed continuously is too long to be recognized by viewers, when the threshold values Th_{I} and Th_{P} are small, the frames may be switched smoothly and the video quality may be greatly enhanced.

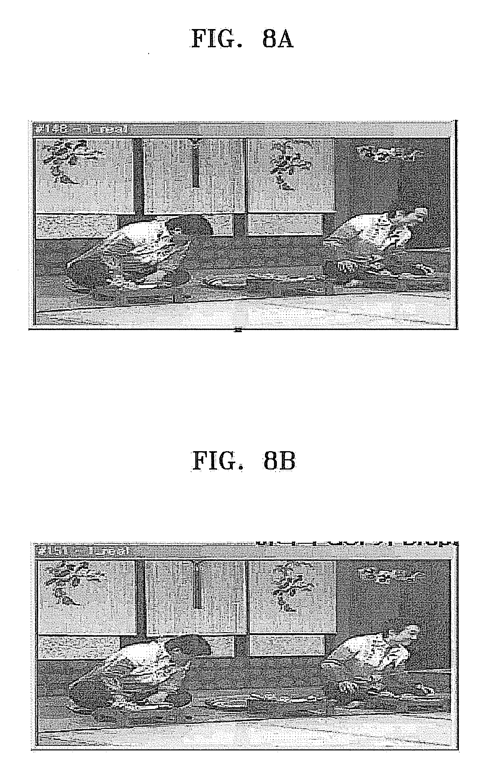

FIGS. 8A and 8B show pictures displayed by reorganized GOPs, according to an example embodiment of the present invention. As shown in FIG. 8A, the picture is a previous frame that was displayed last and that is being continuously displayed by the display unit 430 for a period of time of a GOP because all frames of the GOP are determined not to be displayed by the display determination unit 420. As described above, if the number of error blocks of a first I frame of the GOP is equal to or greater than a predetermined threshold value, the whole GOP may be determined not to be displayed. The picture shown in FIG. 8B is a first frame of a next GOP that is displayed after the previous frame of FIG. 8A is displayed for the period of time of the whole excluded GOP.

Although the pictures in FIGS. 8A and 8B are not completely identical to each other, much less video deterioration may be recognized by viewers in comparison to the pictures illustrated in FIGS. 3A and 3B, which are seriously damaged due to error propagation from a frame having a large number of errors. In addition, frames are disconnected for just a very short time and thus the frames may be smoothly switched.

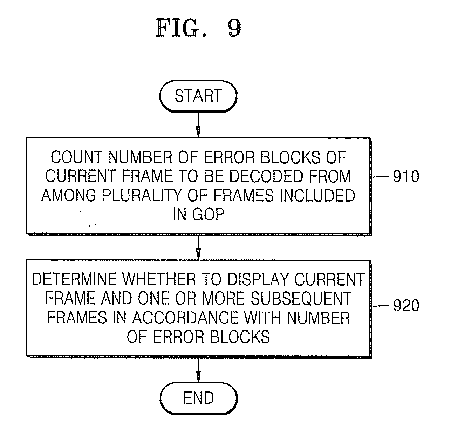

FIG. 9 is a flowchart of a process for video enhancement, according to an embodiment of the present invention. At block 910, the number of error blocks of a current frame to be decoded from among a plurality of frames included in a GOP is counted. The number of error blocks may be counted by counting the frequency of performed error concealment, and the error concealment may be determined according to the type of current frame.

Whether to display the current frame and one or more subsequent frames is determined based on the number of error blocks at block 920. Threshold values may be set separately based on the error concealment, and the number of frames determined to be displayed may be controlled by controlling the threshold values.

If the current frame is determined as having a large number of error blocks and the current frame and the subsequent frames are excluded from a reorganized GOP to be ultimately displayed, a previous frame that was displayed last may be displayed continuously instead of the excluded frames.

Aspects of the present invention can also be embodied as computer readable codes on a computer readable recording medium. The computer readable recording medium is any data storage device that can store data which can be thereafter read by a computer system. Examples of the computer readable recording medium also include read-only memory (ROM), random-access memory (RAM), CD-ROMs, DVDs, magnetic tapes, floppy disks, and/or optical data storage devices. The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

As described above, according to preferred embodiments of the present invention, video quality recognized by viewers may be enhanced by selectively reorganizing GOPs organized by decoding transmitted and compressed video data in accordance with the numbers of error blocks.

If a predetermined threshold value of the numbers of error blocks is large, frames may be smoothly switched, and if the threshold value of the numbers of error blocks is small, pictures having small numbers of errors are displayed on a screen and thus video quality is enhanced. Furthermore, error concealment is not performed on a frame having a large number of errors and is also not performed on subsequent frames, thereby reducing the number of operations.

Since a GOP is displayed on a screen for a very short time, although a few frames are excluded from being displayed, viewers may not recognize the disconnection of frames. Thus, video quality is visually enhanced by displaying frames having a small number of errors instead of frames having a large number of errors.

While there have been illustrated and described what are considered to be example embodiments of the present invention, it will be understood by those skilled in the art and as technology develops that various changes and modifications, may be made, and equivalents may be substituted for elements thereof without departing from the true scope of the present invention. Many modifications, permutations, additions and sub-combinations may be made to adapt the teachings of the present invention to a particular situation without departing from the scope thereof. For example, a method of enhancing video according to an aspect of the present invention may include counting a number of error blocks in a current frame of a GOP and displaying a previous frame of the GOP, instead of the current frame and one or more subsequent frames of the GOP, based on the counted number of errors. Similarly, the display unit may be part of the apparatus or may be provided separately. Accordingly, it is intended, therefore, that the present invention not be limited to the various example embodiments disclosed, but that the present invention includes all embodiments falling within the scope of the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of video enhancement by reorganizing a group of pictures (GOP), the method comprising:
counting a number of error blocks of a current frame to be decoded from among a plurality of frames included in the GOP;
determining whether to display the current frame and one or more subsequent frames based on the number of error blocks; and
displaying the current frame and the subsequent frames based on the determination.

2. The method of claim 1, wherein the counting of the number of error blocks comprises:
detecting the error blocks of the current frame;
adaptively performing error concealment according to a type of the current frame; and
counting a frequency of the performed error concealment.

3. The method of claim 2, wherein whether to display the current frame and the subsequent frames is determined after the error concealment is performed on every block of the current frame.

4. The method of any preceding claim, wherein the determining of whether to display the current frame and the subsequent frames comprises:
determining to display the current frame if the number of error blocks is less than a predetermined threshold value; and
determining not to display the current frame and one or more subsequent frames if the number of error blocks is equal to or greater than the predetermined threshold value.

5. The method of claim 4, further comprising:
determining not to count the numbers of error blocks of the subsequent frames if the number of error blocks is equal to or greater than the predetermined threshold value.

6. The method of claim 5, wherein, if the number of error blocks is equal to or greater than the predetermined threshold value, the determining of whether to display the current frame and the subsequent frames comprises determining to display a previous frame that was displayed prior to the current frame instead of displaying the current frame and the subsequent frames determined not to be displayed.

7. The method of claim 6, further comprising:
reorganizing the GOP with frames determined to be displayed; and
displaying the reorganized GOP.

8. The method of any preceding claim, wherein the number of error blocks is counted in units of frames.

9. The method of any preceding claim, wherein whether to display the current frame and the subsequent frames is determined in units of GOPs.

10. The method of claim 2, wherein the adaptive performing of the error concealment comprises adaptively selecting temporal error concealment or spatial error concealment.

11. The method of claim 2, wherein spatial error concealment is performed if the current frame is an intra (I) frame.

12. The method of claim 2, wherein temporal error concealment is performed if the current frame is a predictive (P) frame.

13. The method of claim 4, wherein the threshold value is set separately according to the type of error concealment.

14. An apparatus (400) to enhance video by reorganizing a group of pictures (GOP), the apparatus comprising:
an error block counter (410) to count a number of error blocks of a current frame to be decoded from among a plurality of frames included in the GOP; and
a display determination unit (420) to determine whether to display the current frame and one or more subsequent frames based on the number of error blocks.

15. The apparatus (400) of claim 14, wherein the error block counter (410) comprises:
an error block detection unit (412) to detect the error blocks of the current frame;
an error concealment performance unit (414) to adaptively perform error concealment according to the type of frame; and
a cumulative counter (416) to count a frequency of the error concealment performed by the error concealment performance unit.

16. The apparatus (400) of claim 14 or claim 15, wherein the display determination unit (420) determines whether to display the current frame and the subsequent frames after the error concealment is performed on every frame of the current block.

17. The apparatus (400) of any one of claims 14-16, wherein the display determination unit (420) comprises:
a first determination unit to determine to display the current frame if the number of error blocks is less than a predetermined threshold value; and
a second determination unit to determine not to display the current frame and the subsequent frames if the number of error blocks is equal to or greater than the predetermined threshold value.

18. The apparatus (400) of claim 17, further comprising:
a third determination unit to determine not to count the number of error blocks of the subsequent frames if the number of error blocks is equal to or greater than the predetermined threshold value.

19. The apparatus (400) of claim 18, wherein, if the number of error blocks is equal to or greater than the predetermined threshold value, the display determination unit (420) determines to display a previous frame that was displayed prior to the current frame instead of the current frame and the subsequent frames that were determined not to be displayed.

20. The apparatus (400) of any one of claims 14-19, further comprising:
a display unit (430) to reorganize the GOP with frames determined to be displayed by the display determination unit (420) and to display the reorganized GOP.

21. The apparatus (400) of any one of claims 14-20, wherein the error block counter (416) counts the number of error blocks in units of frames; and
the display determination unit (420) determines whether to display the current frame and the subsequent frames in units of GOPs.

22. The apparatus (400) of claim 15, wherein the error concealment performance unit (414) adaptively performs temporal error concealment or spatial error concealment; and
performs temporal error concealment if the current frame is a predictive (P) frame.

23. The apparatus (400) of claim 15, wherein the error concealment performance unit (414) performs spatial error concealment if the current frame is an intra (I) frame.

24. The apparatus (400) of claim 17, wherein the threshold value is set separately based on the type of the error concealment.

25. A computer readable recording medium having recorded thereon a computer program to execute the method of any one of claims 1-13.
